# EUROPÄISCHE PATENTSCHRIFT

(11) **EP 1 724 154 B1**
(45) Veröffentlichungstag und Bekanntmachung des Hinweises auf die Patenterteilung: **23.01.2008**
(21) Anmeldenummer: 06017120.4
(22) Anmeldetag: 06.10.2004
(51) Int. Cl.: B60R 5/04

(54) **Laderaumabdeckung mit Verzurrmitteln**
Load compartment cover with tying means
Couverture de soute de baggage et moyens d'arrimage

(30) Priorität: 24.10.2003 DE 10349936
(43) Veröffentlichungstag der Anmeldung: 22.11.2006
(62) Teilanmeldung aus: 04023757.0
(73) Patentinhaber: BOS GmbH & Co. KG, 73760 Ostfildern (DE)
(72) Erfinder: Hintennach, Markus, 73666 Baltmannsweiler (DE); Swientek, Manfred, 73760 Ostfildern (DE); Müller, Kerstin, 73655 Plüderhausen (DE)
(74) Vertreter: Rüger, Barthelt & Abel Patentanwälte

(56) Entgegenhaltungen:
- EP-A- 1 398 220
- WO-A-02/02372
- DE-A1- 10 047 542
- US-A- 5 685 592

## Beschreibung

Bei den früheren Kraftfahrzeugen waren die Lade- oder Kofferräume von PKWs üblicherweise nicht ausgekleidet, weshalb genügend Ecken und Nischen vorhanden waren, in denen kleineres Ladegut verstaut werden konnte. Bei den neueren Fahrzeugen bemühen sich die Designer auch um den Lade- und Kofferraum. Er ist üblicherweise heute mit einem teppichbodenähnlichen Belag ausgekleidet. Der Boden ist weitgehend eben und auch im Seitenbereich fehlen taschenförmige Vertiefungen. Die Folge ist, dass kleines Ladegut, das den Ladeboden nicht vollständig ausfüllt, beim Anfahren und Bremsen und auch beim Kurvenfahren auf dem Ladeboden beliebig verrutscht.

Um dem entgegenzuwirken ist es aus der DE 100 47 542 bekannt, im Boden des Fahrzeugs leiternähnliche Schienen zu verlegen, die als Verankerungsmittel dienen sollen. In die Sprossen der leiternähnlichen Schienen können Verzurrgurte mit Haken eingehängt oder Halteösen verankert werden.

Mit einer solchen Verankerungseinrichtung ist es aber jedoch nicht möglich, nicht formstabiles Ladegut wie beispielsweise Einkaufstaschen oder mit Lebensmittel gefüllte Plastiktüten hängend zu fixieren.

Ohne sonstige weitere Erläuterung zeigt die DE 100 47 542 A1 eine Figur, die zwei Führungsnuten übereinander erkennen lässt, die an einer Laderaumseitenwand ausgebildet sind. Die eine Führungsnut soll dazu vorgesehen sein, die Endstücke eines Auszugsprofils einer Laderraumabdeckung zu führen. Eine weitere Ausnehmung oder Nut gestattet die Halterung von Trennwänden, um einen Lade- oder Kofferraum eines Pkw zu segmentieren.

Ausgehend hiervon ist es Aufgabe der Erfindung ein vereinfachtes System zum Verzurren und Sichern sowie zum hängenden Transport von Ladegut, insbesondere in der Ladebucht von Kombi-PKW, zu schaffen.

Diese Aufgabe wird erfindungsgemäß durch die Laderaumabdeckungseinrichtung mit den Merkmalen des Anspruches 1 gelöst.

Eine Laderaumabdeckungseinrichtung ist mit einem Abdeckelement versehen, das die Gestalt einer Rollobahn oder einer Plane eines Raffrollos aufweisen kann. Zum Führen dieses Abdeckelementes beim Übergang von der Offen- in die Schließstellung und umgekehrt sind seitlich der Ladebucht zwei längs der Ladebucht verlaufende Schienen vorgesehen. An wenigstens einer der Schienen sind Verankerungsmittel für ein in der Ladebucht enthaltenes Ladegut ausgebildet.

Die Schiene weist in Längsrichtung nebeneinander eine Anzahl von Verzurrmitteln auf, beispielsweise in Gestalt von Öffnungen, in die Haken einfach einhängbar sind.

Auf diese Weise wird ein Verankerungsmittel geschaffen, das vom Boden des Laderaums oder der Ladebucht deutlichen beabstandet ist. An diesem Verankerungsmittel lassen sich nun wegen des Abstandes zum Boden auch Tüten, Taschen und dergleichen einhängen.

Wenn derartige Verankerungsmittel auf beiden Seiten des Fahrzeugs vorhanden sind, besteht die Möglichkeit, den Laderaum unterhalb der Fensterkante in Querrichtung zu unterteilen. Hierzu können gegebenenfalls noch weitere Schienen im Boden des Fahrzeugs verwendet werden, wie dies bereits an sich bekannt ist.

Die Schienen können für das Abdeckelement in der bereits bekannten Weise mit den hinterschnittenen Führungsnuten ausgestattet sein, oder auch als einfaches, nach oben offenes Profil, das lediglich eine glatte, schmale Führungsbahn bildet, aus dem das Auszugsprofil für das Abdeckelement jederzeit nach oben aushebbar ist.

Zweckmäßigerweise laufen die Führungsschienen über die gesamte Tiefe der Ladebucht durch.

In jedem Falle ist das Verankerungsmittel an einer Stelle vorgesehen, die sich außerhalb des Lichtraumprofils des Abdeckelementes befindet, wenn das Abdeckelement zwischen der Offen- und der Geschlossenstellung hin und her bewegt wird.

Im Übrigen sind Weiterbildungen der Erfindung Gegenstand von Unteransprüchen.

Beim Lesen der Figurenbeschreibung wird ferner klar, dass eine Reihe von Abwandlungen möglich sind.

In der Zeichnung von Ausführungsbeispiele des Gegenstandes der Erfindung dargestellt. Es zeigen:
- Fig. 1: eine Heckpartie eines Kombi-PKW unter Veranschaulichung der neuen Laderaumabdeckungseinrichtung, in einer aufgebrochenen perspektivischen Darstellung, und
- Fig. 2: die Führungsschiene der Laderaumabdeckeinrichtung nach Fig. 1, in einer vergrößerten perspektivischen Darstellung,

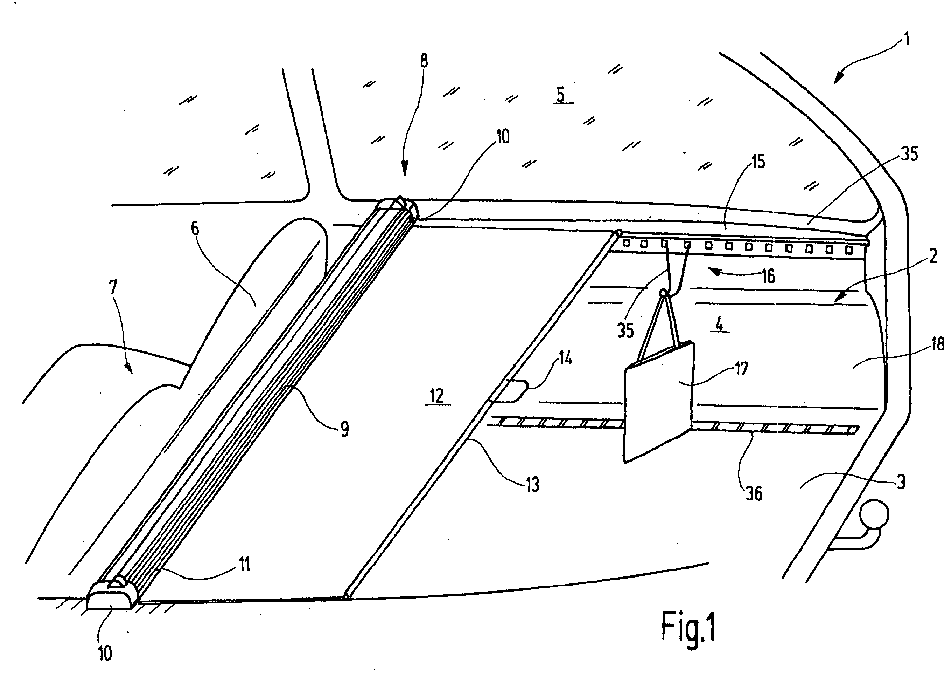

In Fig. 1 ist die aufgebrochen dargestellte Heckpartie 1 eines Kombi-Kraftfahrzeuges oder Personenkraftwagens perspektivisch veranschaulicht. Es ist ein Laderaum oder eine Ladebucht 2 zu erkennen, die von einem Boden 3 sowie zwei Seitenwänden begrenzt, von denen nur die rechte Seitenwand 4 erkennbar ist. Über der Seitenwand 4 befindet sich ein hinteres Seitenfenster 5. Der Abschluss nach vorne der Ladebucht 2 bildet eine Rücksitzlehne 6 einer Rücksitzbank 7.

Zum Abdecken der Ladebucht 2 nach oben ist ein Abdeckrollo 8 vorgesehen. Zu dem Abdeckrollo 8 gehört eine Kassette 9, die sich über die Breite der Ladebucht 2 hinter der Rücksitzlehne 6 erstreckt. Die Kassette 9 liegt in Aufnahmetaschen 10, die in der Fensterleibung des hinteren Seitenfesters 5 vorhanden sind. Die Kassette 9 öffnet sich an einem Auszugsschlitz 11 in Richtung auf die hintere Hecköffnung der Ladebucht 2. Innerhalb der Kassette 9 ist in der üblichen Weise eine nicht erkennbare Wickelwelle drehbar gelagert, an der mit einer Kante eine Rollobahn 12 befestigt ist.

Mittels eines nicht dargestellten Federmotors wird die Wickelwelle im Sinne des Aufwickelns der Rollobahn 2 auf die Wickelwelle vorgespannt.

Um die Rollobahn 2 entgegen der Wirkung des Federmotors abzuziehen, ist an dem freien Ende der Rollobahn ein Auszugsprofil 13 mit einem Handgriff 14 vorhanden.

Zu dem Abdeckrollo 8 gehören ferner zwei Führungsschienen, die unterhalb der Leibung des hinteren Seitenfensters 5 angeordnet sind. Wegen der abgeschnittenen Darstellung ist lediglich die Führungsschiene 15 zu erkennen. Diese Führungsschiene 15 erstreckt sich, wie die spiegelbildlich angeordnete, nicht sichtbare, Führungsschiene, auf der linken Fahrzeugseite von der Kassette 9 bis zu der hinteren Heckklappenöffnung des Kraftfahrzeuges. Sie verläuft etwa horizontal und ist gerade.

Die Führungsschiene 15 weist außerdem Verankerungsmittel 16 auf, mit deren Hilfe Ladegut, beispielsweise eine Einkaufstasche 17, in der Ladebucht 2 zu verankern ist.

Die Führungsschienen 15 sind in seitlichen Innenverkleidungsteilen 18 integriert, die sich unterhalb der Fensterunterkante bis zu dem Boden 3 erstrecken.

Die Funktionsweise der Laderaumabdeckeinrichtung 8 braucht ansonsten nicht weiter erläutert zu werden, da sie für sich genommen, bekannt ist.

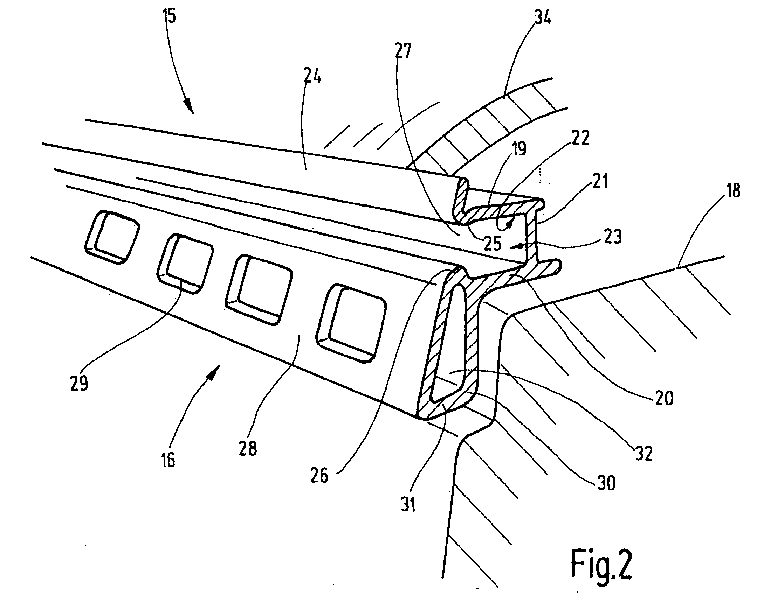

Fig. 2 zeigt in einer vergrößerten perspektivischen Darstellung die Führungsschiene 15. Sie besteht aus einem Aluminiumstrangpressprofil, das beispielsweise geeignet eloxiert ist.

Die Führungsschiene 15 weist zwei parallel zueinander verlaufende Profilabschnitte 19 und 20 auf, die durch einen rechtwinklig dazu verlaufenden Profilabschnitt 21 miteinander verbunden sind. Diese Profilabschnitte 19, 20 und 21 bilden eine Nutenkammer 22 einer Führungsnut 23, in der das Auszugsprofil 13 gleitet.

An seinem freien Ende ist der Profilabschnitt 19 mit einer nach oben aufragenden Leiste 24 versehen, wobei an der Übergangsstelle zwischen der Leiste 24 und dem Profilabschnitt 19 eine Rippe 25 entsteht, die gegenüber dem Profilabschnitt 19, wie gezeigt, nach unten vorspringt.

Der untere Profilabschnitt 20 ist an seinem freien Ende mit einem nach oben aufragenden Rippe 26 versehen, die zusammen mit der Rippe 25 einen Nutenschlitz 27 der Führungsnut 23 bildet. Auf diese Weise entsteht eine hinterschnittene Nut zur Führung des Auszugsprofils 13, da die Breite des Nutschlitzes 27 kleiner ist als die Weite der Nutenkammer 23, gemessen in der vertikalen Richtung.

An die Rippe 26 schließt sich eine nach unten führende Leiste 28 an, die in regelmäßigen Abstand Verankerungsöffnungen 29 enthält.

Um die Leiste 28 auszusteifen, ist eine Stützleite 30 angeformt die von der Unterseite des unteren Profilabschnittes 20 in der Nähe der Rippe 26 ausgeht. Von dieser Stelle führt sie zunächst vertikal nach unten und geht am unteren freien Ende in einen Schenkel 31 über, dessen freies Ende mit der Unterkante der Leiste 28 verbunden ist. Die Leiste 28 und die Stützleiste 30 bilden einen Hohlraum 32 mit dreieckförmigem Querschnitt, der über die Länge der Führungsschiene 15 durchläuft.

Die Führungsschiene 15 liegt auf dem unteren Innenverkleidungsteil 18 auf, das entsprechen konturiert ist. Von der Oberseite der Führungsschiene 15 geht ein weiteres Innenverkleidungsteil 34 aus, das an der Leiste 24 beginnt und bis zu dem Fenster 5 reicht.

Die Verankerung der Führungsschiene 15 ist nicht weiter gezeigt, denn es versteht sich, dass die die Führungsschiene an der Blechkarosserie stabil befestigt ist um die auftretenden Kräfte in die Karosserie einleiten zu können.

Die Öffnungen 29 der Leiste 16 wirken als Verankerungsglieder, in die weitere Verankerungsglieder, beispielsweise in Gestalt von Bügeln 35 eingehängt werden können. Mit Hilfe dieser auskragenden Bügel 35, die sich etwa auf der Höhe der Unterkante der Seitenscheibe 5 befinden, können Taschen oder Beutel 17 mit ihrem Henkel freihängend aufbewahrt werden. Durch diese Bügel werden die Tüten, Beutel oder Taschen 17 daran gehindert, sich frei in der Ladebucht 2 hin und her bewegen zu können, wenn sie aufgrund der Fahrbewegung des Kraftfahrzeuges Beschleunigungskräften ausgesetzt sind. Die Verankerungsmittel sorgen dafür, dass das daran befestigte Ladegut lediglich eine begrenzte Bewegungsfreiheit innerhalb der Ladebucht 2 hat.

Da die Öffnungen 29, die im gezeigten Ausführungsbeispiel etwa quadratisch gestaltet sind, in den dahinter befindlichen Hohlraum 32 münden, können geeignete Aufhängebügel 35, wie der in Fig. 1 gezeigt, in den Öffnungen 98 verhakt werden.

Da sich zwei Führungsschienen 15, wie sie in Fig. 2 gezeigt sind, bezüglich in der Ladebucht 2 gegenüber befinden, besteht die Möglichkeit, zwischen ihnen Netze zu spannen. Die Unterkante eines solchen Netzes kann in eine im Boden 3 der Ladebucht 2 angeordnete Verankerungsschiene 36 festgelegt sein. Die Verankerungsschiene 36 hat eine leiternähnliche Gestalt.

Eine Laderaumabdeckung weist für die Rollobahn oder Rolloplane seitliche Führungsschienen auf. Diese Führungsschienen sind zusätzlich mit Verankerungsmittel versehen, um Ladegut in dem Laderaum soweit festlegen zu können, dass das Ladegut lediglich eine begrenzte Bewegung in dem Laderaum vollführen kann.

## Patentansprüche

1. Laderaumabdeckungseinrichtung (8) für Kraftfahrzeuge, um eine in einem Kraftfahrzeug enthaltene Ladebucht (2) nach oben optisch zu verschließen,
mit einem Abdeckelement (12), das aus einer die Ladebucht (2) verschließenden Stellung in eine Stellung bringbar ist, in der die Ladebucht (2) von oben zumindest zum Teil zugänglich ist,
mit zwei längs der Ladebucht (2) verlaufenden Schienen (15), die dazu eingerichtet sind das Abdeckelement (12) in der Stellung zu halten, in der die Ladebucht (2) optisch verschlossen ist, und
mit wenigstens einer an wenigstens einer der Schienen (15) vorgesehenen Verzurröffnung (29), die unverstellbar mit der Schiene (15) verbunden ist, oder wenigstens einem an wenigstens einer der Schienen () vorgesehenen Verzurrhaken, der unverstellbar mit der Schiene (15) verbunden ist, für wenigstens ein in der Ladebucht (2) enthaltenes Ladegut(17).

2. Einrichtung nach Anspruch 1, **dadurch gekennzeichnet, dass** die beiden Schienen (15) unterschiedliche Querschnittsprofile aufweisen.

3. Einrichtung nach Anspruch 1, **dadurch gekennzeichnet, dass** die Schienen (15) über die Länge der Ladebucht (2) durchlaufen.

4. Einrichtung nach Anspruch 1, **dadurch gekennzeichnet, dass** die beiden Schienen (15) gleiche Querschnittsprofile aufweisen.

5. Einrichtung nach Anspruch 1, **dadurch gekennzeichnet, dass** wenigstens eine der Schienen (15) für das Abdeckelement (12) eine vorzugsweise hinterschnittene Nut (23) für das Abdeckelement (12) enthält.

6. Einrichtung nach Anspruch 1, **dadurch gekennzeichnet, dass** wenigstens eine der Schienen (15) ein nach oben offenes Führungsprofil für das Abdeckelement (2) bildet.

7. Einrichtung nach Anspruch 6, **dadurch gekennzeichnet, dass** die Schiene (15) in Längsrichtung nebeneinander eine Vielzahl von Verzurröffnungen oder -haken (29) aufweist.

8. Einrichtung nach Anspruch 1, **dadurch gekennzeichnet, dass** eine mit der Schiene (15) einstückige Leiste (28) vorhanden ist, die über die Länge der Schiene (28) durchläuft und die die Verzurrösen (29) enthält.

## Claims

1. Luggage area covering arrangement (8) for motor vehicles for closing off a luggage compartment (2) contained in a motor vehicle from view from above, with a covering element (12), which can be moved out of a position closing the luggage compartment (2) into a position, in which the luggage compartment (2) is at least partially accessible from above,
with two rails (15), which run along the luggage compartment (2) and are arranged to hold the covering element (12) in the position, in which the luggage compartment (2) is closed off from view, and
with at least one anchoring opening (29), which is provided in at least one of the rails (15) and is non-adjustably connected to the rail (15), or with at least one anchoring hook, which is provided on at least one of the rails (?) and is non-adjustably connected to the rail (15), for at least one luggage item (17) contained in the luggage compartment (2).

2. Arrangement according to claim 1, **characterised in that** the two rails (15) have different cross-sectional profiles.

3. Arrangement according to claim 1, **characterised in that** the rails (15) extend over the length of the luggage compartment (2).

4. Arrangement according to claim 1, **characterised in that** the two rails (15) have the same cross-sectional profiles.

5. Arrangement according to claim 1, **characterised in that** at least one of the rails (15) for the covering element (12) contains a preferably undercut groove (23) for the covering element (12).

6. Arrangement according to claim 1, **characterised in that** at least one of the rails (15) forms an upwardly open guide profile for the covering element (2).

7. Arrangement according to claim 6, **characterised in that** the rail (15) has a plurality of anchoring openings or hooks (29) arranged next to one another in the longitudinal direction.

8. Arrangement according to claim 1, **characterised in that** a strip (28) is provided in one piece with the rail (15), which extends over the length of the rail (28) and contains the securing eyes (29).

## Revendications

1. Dispositif de recouvrement (8) d'espace à bagages pour véhicules automobiles, destiné à masquer optiquement vers le haut un espace à bagages (2) prévu dans un véhicule, comprenant
un élément de recouvrement (12) qui peut être amené d'une position de fermeture de l'espace à bagages (2) dans une position dans laquelle l'espace à bagages (2) est au moins partiellement accessible d'en haut,
deux rails (15) qui s'étendent le long de l'espace à bagages (2) et sont agencés pour maintenir l'élément de recouvrement (12) dans la position dans laquelle l'espace à bagages (2) est fermé optiquement, et
au moins une ouverture d'arrimage (29), qui est prévue sur au moins l'un des rails (15) et est liée de manière indéréglable au rail (15), ou au moins un crochet d'arrimage qui est prévu sur au moins un des rails (15) et est lié de manière indéréglable au rail (15), pour au moins un objet (17) chargé dans l'espace à bagages (2).

2. Dispositif selon la revendication 1, **caractérisé par le fait que** les deux rails (15) présentent des profils différents en section transversale.

3. Dispositif selon la revendication 1, **caractérisé par le fait que** les rails (15) s'étendent sur toute la longueur de l'espace à bagages (2).

4. Dispositif selon la revendication 1, **caractérisé par le fait que** les deux rails (15) présentent le même profil en section transversale.

5. Dispositif selon la revendication 1, **caractérisé par le fait qu'**au moins un des rails (15) pour l'élément de recouvrement (12) comporte une rainure (23), réalisée de préférence en contre-dépouille, pour l'élément de recouvrement (12).

6. Dispositif selon la revendication 1, **caractérisé par le fait qu'**au moins un des rails (15) forme un profil de guidage ouvert vers le haut pour l'élément de recouvrement (12).

7. Dispositif selon la revendication 6, **caractérisé par le fait que** le rail (15) présente une pluralité d'ouvertures ou de crochets d'arrimage (29) disposés les un(e)s à côté des autres dans la direction longitudinale.

8. Dispositif selon la revendication 1, **caractérisé par le fait qu'**il est prévu une baguette (28) qui est réalisée d'une seule pièce avec le rail (15), s'étend sur toute la longueur du rail (15) et comporte les oeillets d'arrimage (29).
